# EUROPÄISCHE PATENTSCHRIFT

(11) **EP 2 409 578 B1**
(45) Veröffentlichungstag und Bekanntmachung des Hinweises auf die Patenterteilung: **21.12.2016**
(21) Anmeldenummer: 10170659.6
(22) Anmeldetag: 23.07.2010
(51) Int. Cl.: A23L 5/10, A23L 3/005, B65D 81/34, A23L 3/04, H05B 3/54

(54) **Vorrichtung und Verfahren zur Wärmebehandlung eines Produkts, insbesondere eines Lebensmittels**
Device and method for thermal treatment of a product, particularly a food item
Dispositif et procédé de traitement à chaud d'un produit, notamment d'un aliment

(43) Veröffentlichungstag der Anmeldung: 25.01.2012
(73) Patentinhaber: INDAG Gesellschaft für Industriebedarf mbH & Co. Betriebs KG, 69214 Eppelheim (DE)
(72) Erfinder: Tilz, Wolfgang, 68723, Schwetzingen (DE); Chatard, Dominique, 69121, Heidelberg (DE); de With, Axel, 68723, Plankstadt (DE)
(74) Vertreter: Grünecker Patent- und Rechtsanwälte PartG mbB

(56) Entgegenhaltungen:
- EP-A1- 2 175 693
- JP-A- 6 261 723
- JP-A- 2010 124 781
- US-A- 3 099 202
- US-A- 3 167 431
- US-A- 4 996 912
- US-A- 5 069 920

## Beschreibung

Die Erfindung betrifft eine Vorrichtung und ein Verfahren zur Wärmebehandlung eines Produkts, insbesondere eines Lebensmittels, durch Einbringen von Heizenergie in das Produkt mittels eines elektrischen Stroms.

Klassische Konservierungsverfahren, wie beispielsweise in einem Autoklav, verursachen in den behandelten Produkten durch lange Aufheizzeiten und anschließende Ausgleichs- und Haltezeiten eine Überpasteurisierung oder Übersterilisierung und schädigen hitzeempfindliche Inhaltstoffe wie beispielsweise Farbstoffe und Vitamine. Weitere Einschränkungen sind ein benötigter Mindestgehalt an Flüssigkeit im Produkt, eine maximale Größe fester Produktbestandteile und eingeschränkte Gebindegrößen.

Als Alternative wurde daher beispielsweise in der GB 1 354 359 vorgeschlagen, eine Verpackungsdose bestehend aus einem isolierenden zylindrischen Mantel, Metallboden und Metalldeckel mit Produkt zu befüllen, hermetisch zu verschließen und eine Spannung zwischen dem Deckel und dem Boden anzulegen, um das Produkt zu sterilisieren. Auf Grund einer schnelleren Erwärmung und Abkühlung sollen empfindliche Inhaltstoffe und somit Farbe, Geschmack und Struktur des Produkts besser erhalten werden. Dieses Verfahren konnte jedoch bisher großtechnisch nicht wirtschaftlich umgesetzt werden.

Der Erfindung liegt somit die Aufgabe zu Grunde, eine Vorrichtung und ein Verfahren für eine Inhaltsstoffe schonende Produkterwärmung im großtechnischen Maßstab bereit zu stellen.

Die gestellte Aufgabe wird mit einer Vorrichtung nach Anspruch 1 gelöst. Demnach umfasst die erfindungsgemäße Vorrichtung: eine Aufnahmeeinrichtung zum Aufnehmen mehrerer Verpackungseinheiten, die das Produkt beinhalten, und an denen jeweils erste und zweite Elektroden ausgebildet sind; eine erste Elektrodeneinheit, die mit den ersten Elektroden in Kontakt gebracht werden kann, um ein Fließen des elektrischen Stroms zu ermöglichen; und eine zweite Elektrodeneinheit, die mit den zweiten Elektroden in Kontakt gebracht werden kann, um das Fließen des elektrischen Stroms zu ermöglichen. Die ersten und zweiten Elektrodeneinheiten umfassen Anschlusselektroden, die derart angeordnet und verschaltet sind, dass der Strom durch wenigstens zwei Verpackungseinheiten fließen kann.

Somit kann der Strom zeitlich überlappend oder gleichzeitig durch wenigstens zwei Verpackungseinheiten fließen, insbesondere durch alle in einer Behandlungsstellung der Vorrichtung gleichzeitig gehaltenen Verpackungseinheiten. Dadurch kann eine große Zahl an Verpackungseinheiten gleichzeitig wärmebehandelt werden und die Maschinenleistung einer Verpackungsanlage erhöht werden. Es ist zudem möglich, mehrere Verpackungseinheiten mit Hilfe einer gemeinsamen Stromquelle kontrolliert zu erwärmen. Die Anschlusselektroden können so großflächig sein, dass sie mehrere Verpackungseinheiten gleichzeitig kontaktieren, um diese parallel zu schalten. Der Strom ist definitionsgemäß ein Heizstrom, in dem die Heizenergie zur Behandlung des Produkts enthalten ist.

Vorzugsweise sind jeweils zwei Anschlusselektroden der ersten und zweiten Elektrodeneinheit parallel geschaltet, und/oder zumindest eine Anschlusselektrode der ersten Elektrodeneinheit ist in Reihe mit einer Anschlusselektrode der zweiten Elektrodeneinheit geschaltet. Dadurch kann der von den Verpackungseinheiten gebildete elektrische Lastwiderstand an den Arbeitsbereich einer Stromquelle flexibel angepasst werden. Insbesondere können die Lastwiderstände unterschiedlicher Produkte und/oder unterschiedlich großer Verpackungseinheiten an den Arbeitsbereich der jeweils zugeordneten Stromquelle angepasst werden. Es ist auch möglich, die Verpackungseinheiten gruppenweise derart zu verschalten, dass die gebildeten Gruppen jeweils an den Arbeitsbereich einer gemeinsamen oder separaten Stromquelle angepasst werden. Es ist auch möglich, die in das Produkt einzubringende Heizenergie durch das erfindungsgemäße Verschalten an einen Arbeitsbereich der Stromquelle oder eine vorgegebene Behandlungszeit anzupassen.

Bei einer günstigen Ausgestaltung der Vorrichtung sind die Anschlusselektroden der ersten und zweiten Elektrodeneinheit in einer Behandlungsstellung zum Einbringen von Heizenergie in das Produkt einander gegenüberliegend angeordnet und insbesondere zueinander parallel ausgerichtet. Dadurch können Verpackungseinheiten, bei denen die Elektroden an den Stirnflächen angeordnet sind, beispielsweise als metallischer Behälterboden und Behälterdeckel, besonders zuverlässig und einfach kontaktiert werden.

Vorzugsweise sind die Anschlusselektroden der ersten und zweiten Elektrodeneinheit in der Behandlungsstellung ferner unter Einhaltung eines maximalen Abstands zueinander angeordnet, so dass sich die Verpackungseinheiten während der Wärmebehandlung nicht in Richtung der Anschlusselektroden ausdehnen können. Dies ermöglicht die Behandlung dünnwandiger oder flexibler Verpackungseinheiten ohne ein unzulässiges Aufdehnen derselben während oder in Folge der Wärmebehandlung.

Bei einer besonders günstigen Ausgestaltung der Vorrichtung umfasst die Aufnahmeeinrichtung eine insbesondere poröse Ummantelungseinrichtung, die die Verpackungseinheiten während der Wärmebehandlung derart umschließt, dass sich die Verpackungseinheiten nicht über einen vorgegebenes Maß, insbesondere nicht über einen maximalen Durchmesser hinaus ausdehnen können. Dies ermöglicht die Behandlung dünnwandiger oder flexibler Verpackungseinheiten ohne ein unzulässiges Aufdehnen derselben während oder in Folge der Wärmebehandlung. Die Ummantelungseinrichtung kann als wechselbarer Transportrahmen für mehrere Verpackungseinheiten ausgebildet sein, beispielsweise als oder ähnlich einem Bienenwaben-Cluster, in dem die Verpackungseinheiten zunächst vorbereitet, insbesondere gestapelt werden können, um den befüllten Transportrahmen anschließend an der Aufnahmeeinrichtung zur anschließenden Wärmebehandlung zu befestigen. Die Ummantelungseinrichtung kann somit auch als Wechselgarnitur zur Aufnahme unterschiedlich großer Verpackungseinheiten ausgebildet sein. Derartige Transportrahmen können Kosten sparen, indem das Vorbereiten oder Ausrichten der Verpackungseinheiten effizient in den Produktionsprozess eingegliedert wird. Eine poröse und damit wasserdurchlässige Ummantelungseinrichtung erleichtert das Kühlen der Verpackungseinheit unmittelbar nach der Behandlung des Produkts mit einer Kühlflüssigkeit, beispielsweise durch Berieselung, noch innerhalb der erfindungsgemäßen Vorrichtung.

Vorzugsweise umfasst die Vorrichtung wenigstens ein Transportmittel, um die Anschlusselektroden der ersten und zweiten Elektrodeneinheit und die Verpackungseinheiten während der Wärmebehandlung entlang einer gemeinsamen Förderbahn zu bewegen. Dadurch kann ein kontinuierlicher Strom aus Verpackungseinheiten beim Durchlaufen der erfindungsgemäßen Vorrichtung wärmebehandelt werden. Das Transportmittel kann beispielsweise an der Aufnahmevorrichtung vorgesehen sein. Das Transportmittel kann einen oder mehrere Antriebe haben, um die erste und/oder die zweite Elektrodeneinheit und/oder die Aufnahmevorrichtung aktiv anzutreiben. Es ist auch möglich, die Elektrodeneinheiten, insbesondere die zweite Elektrodeneinheit, nur passiv mitlaufen zu lassen. Das heißt, derart dass Anschlusselektroden entlang der Förderbahn durch die Verpackungseinheiten mittels Form- oder Kraftschluss mitgenommen werden und eine vorgegebene Position relativ zur Verpackungseinheit während der Wärmebehandlung einhalten.

Bei einer günstigen Ausgestaltung der Vorrichtung umfasst die Aufnahmeeinrichtung wenigstens ein Rotationsmittel, um die Verpackungseinheiten während der Wärmebehandlung zu drehen. Dadurch kann das Produkt vor oder während der Erwärmung durchmischt werden. Es kann auch eine gewünschte Reaktion des Produkts eingeleitet werden. Vorzugsweise dreht das Rotationsmittel die Verpackungseinheit um seine Hauptachse, insbesondere um eine senkrecht auf die Anschlusselektroden stehende Achse.

Eine besonders günstige Ausgestaltung der Vorrichtung umfasst ferner eine Wechselstromquelle zur Erzeugung von Wärme in dem Produkt, insbesondere eine Wechselstromquelle, die einen Strom im Frequenzbereich von 10 kHz bis 10 MHz erzeugen kann. Dadurch lässt sich gezielt Joulesche Wärme in dem Produkt erzeugen und eine Migration von Produktbestandteilen vermeiden. Ferner kann eine Korrosion der Elektroden bei Berührung des mit Strom durchflossenen Produkts vermieden oder reduziert werden. Besonders günstig ist ein Frequenzbereich von 100 kHz bis 10 MHz, da hohe Frequenzen ein Durchdringen dünner Schichten mit geringer Leitfähigkeit begünstigen, die beispielsweise durch die Ablagerung von Fett auf Elektrodenoberflächen entstehen können. Hohe Wechselstromfrequenzen vermeiden somit eine örtliche Reduzierung der Erwärmungsleistung.

Die gestellte Aufgabe wird ferner gelöst mit einem Verfahren nach Anspruch 9. Demnach umfasst das Verfahren die folgenden Schritte: a) Aufnehmen mehrerer Verpackungseinheiten, die das Produkt enthalten, und an denen jeweils erste und zweite Elektroden ausgebildet sind; b) Herstellen eines Kontakts zwischen den ersten Elektroden und einer ersten Elektrodeneinheit sowie zwischen den zweiten Elektroden und einer zweiten Elektrodeneinheit, um das Fließen des elektrischen Stroms zu ermöglichen; und c) Verschalten von Anschlusselektroden, die an der ersten und zweiten Elektrodeneinheit vorgesehenen sind, und Anlegen einer elektrischen Spannung derart, dass der elektrische Strom durch mindestens zwei Verpackungseinheiten gleichzeitig fließt.

Vorzugsweise liegt die Leitfähigkeit des Produkts im Bereich von 10⁻³ S/m bis 10 S/m. In diesem Bereich lässt sich eine Erwärmung besonders effektiv durchführen, sowohl für flüssige Produkte, feste Produkte und Mischprodukten mit festen und flüssigen Bestandteilen.

Das Verfahren lässt sich besonders vorteilhaft durchführen, wenn das Produkt mittels der Wärmebehandlung sterilisiert wird. Die strominduzierte Erwärmung erlaubt einen präzisen Energieeintrag und kann eine Übersterilisierung mit negativen Auswirkungen auf die Produktqualität vermeiden. Das Verfahren ist generell zur thermischen Konservierung von Produkten geeignet.

Vorzugsweise werden die Verpackungseinheiten nach der Wärmebehandlung mit entsalztem Wasser gekühlt. In diesem Fall kann die Kühlung bereits unmittelbar nach Abschluss der Erwärmung im Bereich der Anschlusselektroden erfolgen, ohne Gefahr eines elektrischen Spannungsüberschlags aufgrund von Restfeuchtigkeit der Anschlusselektroden bei nachfolgenden Verpackungseinheiten oder Produktchargen.

Bei einer besonders günstigen Ausgestaltung des Verfahrens wird eine Zieltemperaturerhöhung des Produkts durch Anpassen der mit Hilfe des elektrischen Stroms in das Produkt eingebrachten elektrischen Heizenergie an die Wärmekapazität des Produkts eingestellt. Die Zieltemperatur in der Verpackungseinheit kann auch während oder nach der Wärmebehandlung anhand der zugeführten elektrischen Heizenergie kontrolliert werden. Außerdem kann der Einfluss von Umgebungsbedingungen, die bei der äußeren Temperaturmessung zu berücksichtigen sind, vernachlässigt werden und die Erwärmung des Produkts durch die tatsächlich zugeführte elektrische Energie verglichen werden.

Vorzugsweise wird eine Zieltemperaturerhöhung des Produkts an der Verpackungseinheit von außen mittels Infrarot-Thermometer oder Pyrometer überwacht und insbesondere mit der eingebrachten elektrischen Heizenergie verglichen. Dadurch kann die Zieltemperaturerhöhung sichergestellt werden. Die Zieltemperaturerhöhung kann dadurch außerdem dokumentiert werden.

Vorzugsweise werden die Verpackungseinheiten im Schritt a) in einem luftdicht verschlossenen Zustand aufgenommen. Dadurch kann das fertig verpackte Produkt wärmebehandelt werden, insbesondere zur Pasteurisierung oder Sterilisation, und die Qualität des gebrauchsfertigen Produkts sichergestellt werden. Das Verfahren läst sich jedoch auch an noch nicht fertig versiegelten Verpackungseinheiten durchführen, beispielsweise mittels Auflegen der oberen Verpackungselektrode auf das Produkt bei stehender Verpackungseinheit, nachfolgender Wärmebehandlung und schließlich dem Versiegeln der Verpackungseinheit.

Vorzugsweise werden die Verpackungseinheiten während der Wärmebehandlung kontinuierlich entlang einer Fördertrecke bewegt. Dadurch lässt sich das Verfahren besonders effizient in einer Produktionsanlage durchführen, da im Vergleich zu einem stapelweisen Chargen- oder Batch-Betrieb höhere Maschinenleistungen möglich sind und keine oder weniger Produktpuffer im eingangs- und/oder ausgangsseitigen Produktstrom benötigt werden.

Bevorzugte Ausführungsformen der Erfindung sind in der Zeichnung dargestellt. Es zeigen:
- Figur 1: einen schematischen Schnitt durch eine erste Ausführungsform der Erfindung von oben gesehen;
- Figur 2: eine schematische Teilansicht der ersten Ausführungsform von der Seite gesehen und mit einer alternativen elektrischen Verschaltung; und
- Figur 3: eine schematische Darstellung einer zweiten Ausführungsform der Erfindung; von oben gesehen;
- Figur 4: eine schematische Darstellung einer porösen Ummantelungseinrichtung zur Rieselkühlung von Verpackungseinheiten; und
- Figur 5: eine befüllte Verpackungseinheit in einer zum Zuführen elektrischer Energie geeigneten liegenden Stellung.

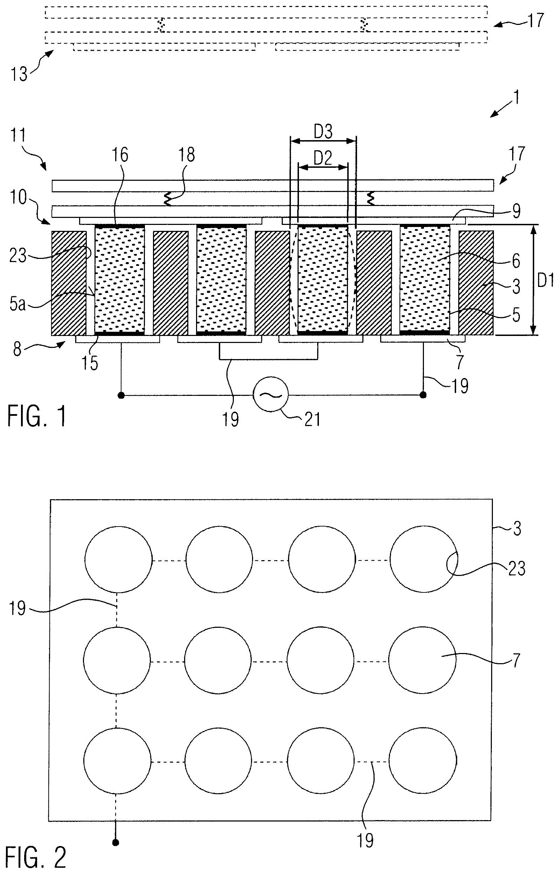

Wie Figur 1 erkennen lässt, umfasst die erfindungsgemäße Vorrichtung 1 eine Aufnahmeeinrichtung 3 für eine Vielzahl von Verpackungseinheiten 5, die ein mit Wärme zu behandelndes Produkt 6 wie beispielsweise ein zu konservierendes Lebensmittel oder ein pharmazeutisches Produkt beinhalten. An der Aufnahmeeinrichtung 3 sind erste Anschlusselektroden 7 zum Durchleiten eines elektrischen Behandlungsstroms durch das in der Verpackungseinheit 5 enthaltene Produkt 6 vorgesehen. Die ersten Anschlusselektroden 7 bilden eine erste Elektrodeneinheit 8. Den ersten Anschlusselektroden 7 zugeordnet sind zweite Anschlusselektroden 9 zum Durchleiten des elektrischen Behandlungsstroms durch das in der Verpackungseinheit 5 enthaltene Produkt 6. Die zweiten Anschlusselektroden 7 bilden eine zweite Elektrodeneinheit 10.

Die ersten und zweiten Elektrodeneinheiten 8, 10 sind gegeneinander beweglich zwischen einer Behandlungsposition 11, in der sowohl erste als auch zweite Anschlusselektroden 7, 9 die Verpackungseinheit 5 derart berühren, dass ein elektrischer Kontakt mit an den Verpackungseinheiten 5 vorgesehenen Elektroden 15, 16 (nachfolgend zur besseren Verständlichkeit auch als Verpackungselektroden bezeichnet) wie beispielsweise einem elektrisch leitenden Behälterboden und -deckel hergestellt wird, und einer gestrichelt angedeuteten Beschickungsposition 13, in der die Verpackungseinheiten 5 in die Aufnahmevorrichtung 3 eingebracht oder aus dieser entnommen werden können. Hierbei sind wenigstens die ersten oder zweiten Anschlusselektroden 7, 9 nicht in elektrischem Kontakt mit den Verpackungselektroden 15, 16.

Die zweite Elektrodeneinheit 10 ist vorzugsweise an einer Positioniereinrichtung 17 zum Aufsetzen der zweiten Anschlusselektroden 9 auf die zugeordneten Verpackungselektroden 16 befestigt. Die Positioniereinrichtung 17 umfasst vorzugsweise eine Andrückeinrichtung 18, wie beispielsweise wenigstens eine Druckfeder oder eine elastische Materialschicht, um einen zuverlässigen Kontakt zwischen den Verpackungselektroden 15, 16 und den Elektrodeneinheiten 8, 10 herzustellen. Die Andrückeinrichtung 18 kann statt elastischer Elemente oder zusätzlich eine Arretierung umfassen. Die Andrückeinrichtung 18 ist so ausgebildet, dass zwischen den ersten und zweiten Anschlusselektroden 7, 9 ein maximaler Abstand D1 auch gegen einen Überdruck in der Verpackungseinheit 5 während der Wärmebehandlung eingehalten werden kann.

Es wäre auch möglich, mehrere Positioniereinrichtungen 17 für einzelne Anschlusselektroden 9 oder für Untergruppen der zweiten Anschlusselektroden 9 vorzusehen. Die Anschlusselektroden 7, 9 können, wie beispielhaft für die zweite Elektrodeneinheit 10 angedeutet, so großflächig ausgebildet sein, dass sie jeweils wenigstens zwei Verpackungselektroden 15, 16 kontaktieren können. Um eine möglichst flexible Verschaltung der Elektrodeneinheiten 8, 10 zu ermöglichen können aber auch für jede Verpackungseinheit 5 je eine erste und zweite Anschlusselektrode 7, 9 vorgesehen sein.

Auch die erste Elektrodeneinheit 8 könnte gegenüber der Aufnahmevorrichtung 3 mittels einer weiteren oder derselben Positioniereinrichtung 17 beweglich sein, um in Analogie zur zweiten Elektrodeneinheit 10 zwischen der Behandlungsstellung 11 und der Beschickungsstellung 13 zu wechseln.

Entscheidend ist, dass die Elektrodeneinheiten 8 und/oder 10 gleichzeitig oder zumindest zeitlich überlappend in die Behandlungsstellung 11 gebracht werden können, um einen Behandlungsstromkreis 19 mit einer Wechselstromquelle 21 durch die zwischen den ersten und zweiten Anschlusselektroden 7, 9 gehaltenen Verpackungseinheiten 5 und das Produkt 6 zu schließen.

Wie Figur 1 ferner andeutet, umfasst die Aufnahmeeinrichtung 3 Halterungen 23 für je eine Verpackungseinheit 5, wobei die Halterungen 23 die Verpackungseinheiten 5 zumindest teilweise ummanteln, so dass eine Ausdehnung der Verpackungseinheiten 5 während einer Wärmebehandlung durch die Halterungen 23 begrenzt wird, wie in der Figur 1 für eine Verpackungseinheit 5 gestrichelt angedeutet mittels eines nominellen Durchmessers D2 der Verpackungseinheit 5 im nicht erwärmten Zustand und eines maximalen Durchmessers D3 während der Wärmebehandlung, der im Wesentlichen dem Innendurchmesser der Halterung 23 entspricht.

Die Halterungen 23 sind vorzugsweise, jedoch nicht zwingend, als Ummantelungseinrichtung ausgebildet, beispielsweise als Ausnehmungen in der Aufnahmeeinrichtung 3 oder als rohrförmige Hülsen, wobei die aufnehmenden inneren Querschnitte der Ummantelungseinrichtung vorzugsweise an die Form, insbesondere den Querschnitt der jeweils zu behandelnden Verpackungseinheiten 5 angepasst ist.

Die Halterungen 23 könnten auch als schnell wechselbare Garniturteile ausgebildet sein, beispielsweise in einen Transportrahmen integriert, insbesondere als oder ähnlich einem Bienenwaben-Cluster, um die Aufnahmevorrichtung 3 an Verpackungseinheiten 5 unterschiedlicher Größen und Formen anzupassen.

Die dargestellte liegende Position der Verpackungseinheiten 5 während der Wärmebehandlung ist zum Einen vorteilhaft für einen zuverlässigen Kontakt des Produkts 6 mit den Elektroden 15, 16, beispielsweise bei Gaseinschlüssen in der Verpackungseinheit 5; sie kann zudem die Handhabung der Verpackungseinheiten 5 vereinfachen, beispielsweise wenn die Verpackungseinheiten 5 in den Halterungen 23, insbesondere in wechselbaren Transportrahmen, gestapelt und/oder für die Wärmebehandlung vorbereitet werden. Die Aufnahmevorrichtung 3 könnte die Verpackungseinheiten 5 jedoch auch auf den Verpackungselektroden 15 stehend aufnehmen.

Ummantelnde Halterungen 23 ermöglichen eine Wärmebehandlung begleitet von einem signifikanten Druckanstieg in der Verpackungseinheit 5, wie beispielsweise eine Sterilisation, auch bei vergleichsweise geringer mechanischer Stabilität der Verpackungseinheiten 5 und erübrigen gegebenenfalls eine kompensierende Erhöhung des Umgebungsdrucks in einer Überdruckkammer. Dies gilt insbesondere in Verbindung mit der Andrückvorrichtung 18, die vorzugsweise so ausgebildet ist, dass sie einer Ausdehnung der Verpackungseinheit 5 in Richtung der Elektrodeneinheiten 8, 10 entgegen wirkt oder diese verhindert.

Die Halterungen 23 müssen jedoch nicht als Ummantelung ausgebildet sein, beispielsweise wenn die Verpackungseinheiten 5 so stabil sind, dass sie einem Druckanstieg während einer Wärmebehandlung in der Vorrichtung 1 widerstehen können. Es kann auch ausreichend sein, dass die Halterungen 23 nur einen Teil einer Mantelfläche 5a der Verpackungseinheiten 5 abdecken, beispielsweise einen mittigen Abschnitt, um diesen abzustützen. Die Halterungen 23 könnten somit beispielsweise auch als Klammern ausgebildet sein, um das Beschicken und Entleeren der Vorrichtung 1 zu erleichtern und/oder die Verpackungseinheiten 5 in der Behandlungsstellung 11 mechanisch vor einer übermäßigen Verformung als Folge eines internen Druckanstiegs zu schützen.

In der Figur 1 sind die ersten und zweiten Anschlusselektroden 7, 9 jeweils in Reihe geschaltet, so dass durch die zugeordneten Verpackungseinheiten 5 derselbe Behandlungsstrom fließen kann. Es wäre aber auch eine vollständige oder gruppenweise Parallelschaltung möglich, so dass zwischen den parallel geschalteten Anschlusselektroden 7, 9 dieselbe Spannung angelegt werden kann.

Figur 2 zeigt eine Teilansicht der ersten Ausführungsform von oben in einer Variante, bei der die ersten Anschlusselektroden 7 parallel geschaltet sind. Es versteht sich von selbst, dass die zweiten Anschlusselektroden 9 dann dazu passend verschaltet sind. Ebenso wären Kombinationen aus Reihenschaltung und Parallelschaltung möglich. Dadurch lassen sich die elektrischen Anschlusswerte, insbesondere der Lastwiderstand unterschiedlicher Produkte 6 an die Charakteristik der Wechselstromquelle 21 anpassen. Anzahl und Anordnung der gezeigten Anschlusselektroden 7, 9 und Halterungen 23 sind hierbei lediglich beispielhaft.

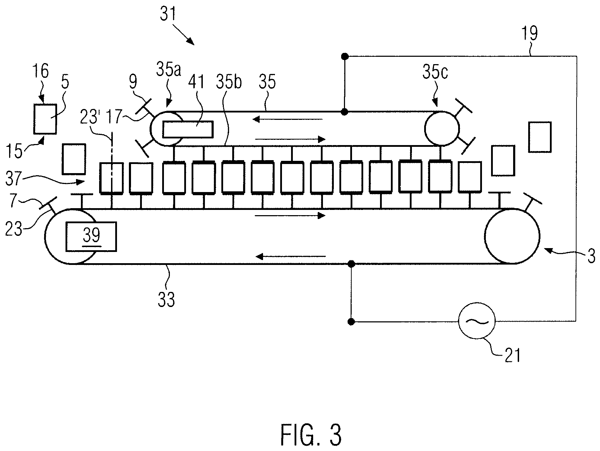

Während sich die Vorrichtung 1 der ersten Ausführungsform in erster Linie für eine stapelweise Wärmebehandlung des Produkts 6 eignet, ist die in Figur 3 dargestellte Vorrichtung 31 einer zweiten Ausführungsform für die Behandlung eines kontinuierlich durch die Vorrichtung 31 laufenden Stroms aus Verpackungseinheiten 5 ausgelegt.

Wie die Figur 3 erkennen lässt, umfasst die Aufnahmeeinrichtung 3 in diesem Fall ein erstes Transportmittel 33, vorzugsweise in Form eines endlos umlaufenden Förderbands, mit Halterungen 23 und ersten Anschlusselektroden 7. Diese sind der Einfachheit halber nur schematisch angedeutet und können beispielsweise, wie im Zusammenhang mit der ersten Ausführungsform beschrieben, Klammern und Ausnehmungen zum Halten und/oder Ummanteln der Verpackungseinheiten 5 umfassen. Es sind generell aber auch andere Befestigungsprinzipien denkbar, beispielsweise vakuumunterstützte Saugkompensatoren zur Ankopplung der Verpackungseinheiten 5 an die Aufnahmeeinrichtung 3.

Wie die Figur 3 außerdem zeigt, ist ein zweites Transportmittel 35 vorzugsweise ebenfalls in Form eines endlos umlaufenden Förderbands vorgesehen zum Aufsetzen und Bewegen der zweiten Anschlusselektroden 9 entlang einer gemeinsamen Förderbahn 37 für die ersten und zweiten Anschlusselektroden 7, 9 und die zwischen diesen gehaltenen Verpackungseinheiten 5. Das Aufsetzen der zweiten Anschlusselektroden 9 kann, wie angedeutet, an einem ersten Umkehrpunkt 35a des zweiten Transportmittels 35 erfolgen, im gezeigten Beispiel am Beginn eines Innentrums 35b des zweiten Transportmittels 35, und das Abheben der Anschlusselektroden 9 entsprechend an einem zweiten Umkehrpunkt 35c, im Beispiel am Ende des Innentrums 35b.

Es wäre aber auch bei dieser Ausführungsform möglich, eine Positioniereinrichtung 17 zum Aufsetzen der zweiten Anschlusselektroden 9 auf die zugeordneten Verpackungselektroden 16 vorzusehen, vorzugsweise in Form separater Hubmechanismen, um die zweiten Anschlusselektroden 9 einzeln gegen die zweiten Verpackungselektroden 16 zu drücken. Ebenso kann in Analogie zur ersten Ausführungsform eine Andrückvorrichtung 18 vorgesehen sein. Die ersten und zweiten Anschlusselektroden 7, 9, die der Einfachheit halber nur in dem einander zugewandten Bereich der Transportmittel 33, 35 dargestellt sind, bilden auch bei der zweiten Ausführungsform eine erste und zweite Elektrodeneinheit 8, 10, um einen Stromfluss durch den Stromkreis 19 und damit durch das Produkt 6 zu ermöglichen. Der elektrische Anschluss an die Transportmittel 33, 35 ist in Figur 3 vereinfachend dargestellt. Die Anschlusselektroden 7, 9 können selbstverständlich an anderer Stelle oder an separaten Verbindungspunkten in den Stromkreis 19 eingebunden sein.

Die ersten und zweiten Anschlusselektroden 7, 9 sind vorzugsweise jeweils parallel geschaltet. Dies ermöglicht eine besonders einfache elektrische Anbindung der Elektrodeneinheiten 8, 10 an die Wechselstromquelle 21.

An wenigstens einer Elektrodeneinheit 8, 10 kann eine Schalteinrichtung (nicht dargestellt) vorgesehen sein, um den Stromkreis 19 durch die Anschlusselektroden 7, 9 und die Verpackungselektroden 15, 16 zu öffnen und zu schließen. Vorzugsweise ermöglicht die Schalteinrichtung ein separates Ein- und Ausschalten des Behandlungsstroms durch einzelne Verpackungseinheiten 5. Dadurch kann der Behandlungsstrom unabhängig vom Zeitpunkt des Aufsetzens der jeweiligen Anschlusselektrode 9 auf die Verpackungselektrode 16 eingeschaltet und ausgeschaltet werden.

Es wäre auch möglich mehrere Anschlusselektroden 7, 9 in Förderrichtung jeweils nicht nur hintereinander sondern auch übereinander anzuordnen, um mehrere parallele Förderströme der Verpackungseinheiten 5 in der erfindungsgemäßen Vorrichtung 31 zu realisieren. Die jeweils übereinander angeordneten Anschlusselektroden 7, 9 könnten auch bei dieser Ausführungsform wahlweise parallel oder in Reihe geschalten werden und/oder von separaten Stromquellen 21 gespeist werden. Somit ist eine flexible Verschaltung der Anschlusselektroden 7, 9 in der erfindungsgemäßen Vorrichtung 31 auch für die Wärmebehandlung eines kontinuierlichen Produktstroms möglich.

Die Transportmittel 33, 35 umfassen vorzugsweise jeweils eine eigene Antriebseinheit 39, 41, um die Halterungen 23 mit den ersten Anschlusselektroden 7 und die Anschlusselektroden 9 aktiv entlang der Förderstrecke 37 zu bewegen. Es wäre aber auch möglich, beispielsweise nur am ersten oder zweiten Transportmittel 33, 35 einen eigenen Antrieb 39, 41 vorzusehen und das jeweils andere Transportmittel 33, 35 passiv mitlaufen zu lassen, solange ein ausreichender Kontakt zwischen den Anschlusselektroden 7, 9 und den Verpackungselektroden 15, 16 gewährleistet ist. Die Geschwindigkeit der Transportmittel 33, 35 ist vorzugsweise einstellbar, so dass die Erwärmung des Produkts 6 auch über die Verweildauer auf den Transportmitteln 33, 35 beeinflusst werden kann.

Die in Figur 3 in einer Draufsicht gezeigte Anordnung ist eine Variante zum liegenden Fördern der Verpackungseinheiten 5 während der Wärmebehandlung, wobei die Elektrodeneinheiten 7, 9 in der Behandlungsstellung 11 seitlich der Förderbahn 37 angeordnet sind. Die Halterungen 23 können beispielsweise als wannenförmige oder kanalartige Ausnehmungen ausgebildet sein.

Für die zweite Ausführungsform wäre bei bestimmten Produkten 6 und/oder Verpackungseinheiten 5 auch ein stehendes Fördern denkbar, beispielsweise mit einem unteren Transportmittel 33 mit den Haltern 23 und den ersten Anschlusselektroden 7 sowie mit einem oberen Transportmittel 35 mit den Anschlusselektroden 9. Diese Anordnung begünstigt ein einfaches Beschicken der Vorrichtung 31 und Entnehmen der behandelten Verpackungseinheiten 5, da die Verpackungseinheiten 5 auf das untere Transportmittel 33 gestellt werden können. Das obere Transportmittel 35 ist dann entweder geeignet angetrieben oder läuft passiv mit, so dass sich die Anschlusselektroden 9 während der Behandlung des Produkts 6 synchron mit den zugeordneten Anschlusselektroden 7 und Verpackungseinheiten 5 bewegen.

Die Halterungen 23 könnten um eine zu den Anschlusselektroden 7, 9 senkrechte Achse 23' mittels eines an der Aufnahmevorrichtung 3 vorgesehenen (nicht dargestellten) Rotationsmittels wie eines Motors und einer Welle drehbar sein, um eine Produktvermischung oder eine Reaktion im Produkt 6 zu begünstigen. Dies wird vorzugsweise so durchgeführt, dass während der Energieaufnahme über die Elektroden 15, 16, der elektrische Kontakt durch eine eventuell mögliche Gasraumverschiebung in der Verpackungseinheit 5 nicht unterbrochen wird.

Es versteht sich von selbst, dass zusammen geschaltete Gruppen einzelner Anschlusselektroden 7, 9 auch als durchgängige Kontaktflächen ausgebildet sein könnten. Beispielsweise könnte wenigstens ein Transportmittel 33, 35 ein elektrisch leitendes Förderband umfassen, um den Kontakt zu den Verpackungselektroden 15, 16 herzustellen.

Ebenso können die beschriebenen und/oder zeichnerisch dargestellten Merkmale der ersten und zweiten Ausführungsform der Erfindung beliebig in technisch sinnvoller Weise kombiniert werden.

Mit der ersten Ausführungsform 1 der erfindungsgemäßen Vorrichtung kann wie folgt gearbeitet werden:
Das Produkt 6 wird in Verpackungseinheiten 5 mit je zwei Verpackungselektroden 15, 16 bereit gestellt, durch die ein Strom zur Wärmebehandlung des Produkts geleitet werden kann. Je nach elektrischer Leitfähigkeit des Produkts 6 werden die Anschlusselektroden 7, 9 der ersten und zweiten Elektrodeneinheit 8, 10 so verschaltet, dass ein Gesamtlastwiderstand durch alle Verpackungseinheiten 5 innerhalb eines vorgegebenen, für einen anzuschließenden Wechselstromgenerator 21 geeigneten Arbeitsbereichs liegt. Alternativ wäre es auch möglich, einzelne Anschlusselektroden 7, 9 in Gruppen zusammen zu schalten und die jeweiligen Gruppen an separate Wechselstromgeneratoren 21 anzuschließen.

Die Wärmebehandlung des Produkts 6 kann insbesondere dadurch optimiert werden, dass die Verpackungseinheiten 5 in Abhängigkeit von der elektrischen Leitfähigkeit des Produkts 6 und/oder der Verpackungsdimensionen in geeigneter Weise parallel, in Reihe oder in einer Kombination aus Reihen- und Parallelschaltung an einen oder mehrere Wechselstromgeneratoren 21 angeschlossen werden und so an den Arbeitsbereich des jeweils verwendeten Wechselstromgenerators 21 angepasst werden.

Aus Kostengründen ist es wünschenswert, möglichst viele Verpackungseinheiten 5 gleichzeitig mit nur einem Wechselstromgenerator 21 zu erwärmen. Vorteilhaft ist es, Verpackungseinheiten 5 mit identischen elektrischen Anschlusswerten, also identischem Inhalt und identischer Verpackungsgröße zu einer gemeinsam mit Wechselstrom versorgten Gruppe zusammen zu schalten.

Die mit dem Produkt 6 befüllten Verpackungseinheiten 5 werden aus einer nicht gezeigten Bereitstellungseinrichtung in je eine Halterung 23 der Aufnahmeeinrichtung 3 eingebracht. Sind die Halterungen 23 Bestandteil eines wechselbaren Transportrahmens, wird dieser mit den Verpackungseinheiten 5 bestückt und in die Aufnahmeeinrichtung 3 eingesetzt. In der Beschickungsstellung 13 werden die ersten Verpackungselektroden 15 der Verpackungseinheiten 5 somit im Bereich der ersten Elektrodeneinheit 8 angeordnet.

Anschließend wird die zweite Elektrodeneinheit 10 auf die noch freiliegenden zweiten Verpackungselektroden 16 aufgesetzt, um eine elektrische Verbindung von den Anschlusselektroden 7, 9 der ersten und zweiten Elektrodeneinheit 8, 10 durch das Produkt 6 in den Verpackungseinheiten 5 herzustellen und somit in die Behandlungsstellung 11 zu wechseln. Hierbei sind die Anschlusselektroden 7, 9 der ersten und zweiten Elektrodeneinheit 8, 10 insbesondere bei dünnwandigen Verpackungseinheiten 5 in einem festen Abstand D1 zueinander angeordnet, der sich auch bei einem erwärmungsbedingten Druckanstieg in der Verpackungseinheit 5 nicht ändert. Die Halterungen 23 verhindern bei dünnwandigen Verpackungseinheiten 5 zudem ein unzulässiges Aufdehnen ihrer Mantelfläche 5a in Folge eines erwärmungsbedingten Druckanstiegs.

Es wird nun eine an das Produkt 6 und die Abmessungen der Verpackungseinheiten 5 angepasste Wechselspannung an die Elektrodeneinheiten 7, 9 angelegt, so dass durch das Produkt 6 ein Strom fließt und das Produkt insbesondere durch Joulesche Erwärmung behandelt wird. Die Frequenz der Spannungsquelle beträgt 50 Hz bis 10 MHz, vorzugsweise 10 kHz bis 10 MHz, idealerweise 100 kHz bis 10 MHz.

Die Höhe des erforderlichen Energieeintrags ist abhängig von der spezifischen Wärmekapazität, aber auch den elektrischen Eigenschaften des jeweiligen Produkts 6, insbesondere von der Homogenität der räumlichen Leitfähigkeitsverteilung im Produkt 6. Bei einer inhomogenen Produktleitfähigkeit, beispielsweise bei einer Mischung aus einem Elektrolyten und Feststoffen, wird der Produktanteil mit der höheren Leitfähigkeit schneller erwärmt und der Produktbestandteil mit geringerer Leitfähigkeit zusätzlich durch Wärmeleitung erwärmt. Die dadurch verursachte Verlängerung der Behandlungszeit kann bei der Verschaltung der Anschlusselektroden 7, 9 und den Behandlungsparametern des Wechselstromgenerators 21 berücksichtigt werden.

Die Erwärmung des Produkts 6 wird anhand der vom Wechselstromgenerator 21 abgegebenen elektrischen Energie kontrolliert und ermöglicht dadurch eine zuverlässigere und einfachere Überwachung der Wärmebehandlung als mit einer herkömmlichen Temperaturmessung an oder in der verschlossenen Verpackungseinheit 5. Die zugeführte elektrische Energie lässt sich genau dosieren, wobei die Temperaturerhöhung des Produkts 6 in Abhängigkeit von der bekannten Wärmekapazität des Produkts 6 ermittelt werden kann. Die Wärmebehandlung lässt sich somit in kurzer Zeit und mit großer Genauigkeit durchführen.

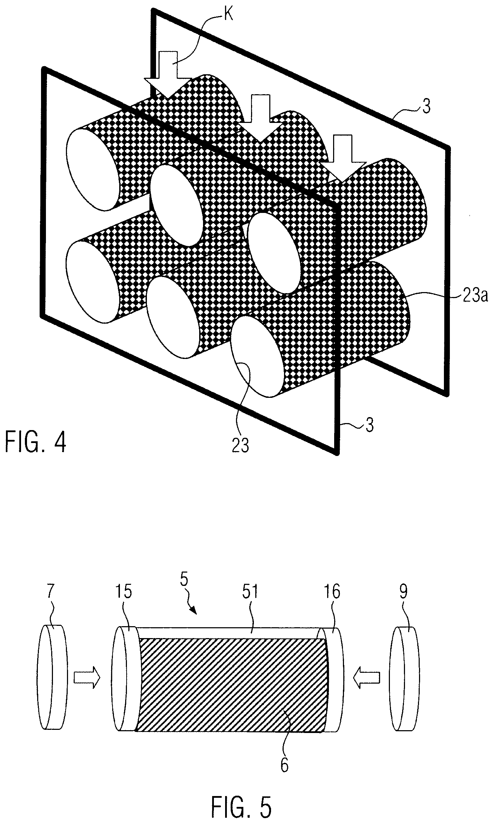

Die Verpackungseinheit 5 wird nach Beendigung des Energieeintrags zum Zwecke der Produktschonung vorzugsweise noch in der erfindungsgemäßen Vorrichtung 1, 31 gekühlt. Dies erfolgt vorzugsweise mit deionisiertem Wasser, das einen effektiven Wärmeübergang gewährleistet und die Gefahr eines elektrischen Überschlags an mit Kühlwasser befeuchteten Anschlusselektroden 7, 9 reduziert. Eine zur Kühlung geeignete Variante der erfindungsgemäßen Vorrichtungen 1, 31 ist in Figur 4 angedeutet. Demnach ist die Halteeinrichtung 3 als Transportrahmen mit porösen Halterungen 23 ausgebildet, so dass eine durch Blockpfeile K angedeutete Rieselkühlung der Verpackungseinheiten 5 oder eine vergleichbare Wasserzufuhr durch in den Halterungen 23 ausgebildete Öffnungen 23a möglich ist. Die Halterungen 23 können beispielsweise druckstabile Lochbleche, Geflechte oder ähnlich wasserdurchlässigen Strukturen umfassen. Entscheidend ist, dass die porösen Halterungen 23 so stabil sind und die Verpackungseinheiten 5 derart ummanteln können, dass eine unerwünschte Verformung der Verpackungseinheiten 5 während der Wärmebehandlung und eine Kühlung vorzugsweise unmittelbar nach dem Ende der elektrischen Energiezufuhr möglich ist.

Je nach Stabilität der Verpackungseinheiten 5 und der maximalen Temperatur des Produkts 6 kann die Wärmebehandlung auch in einer Überdruckkammer durchgeführt werden.

Die wärmebehandelten Verpackungseinheiten 5 können schließlich aus der Aufnahmeeinrichtung 3 entnommen und diese erneut bestückt werden.

Mit der zweiten Ausführungsform 31 der Erfindung kann in entsprechender Weise gearbeitet werden. Die Verpackungseinheiten 5 werden jedoch nicht stapelweise zugeführt und entnommen sondern als kontinuierlicher Produktstrom. Somit überlappt die Wärmebehandlung einzelner Verpackungseinheiten 5 zeitlich. Anders gesagt, fließt der Behandlungsstrom während des Förderns der Verpackungseinheiten 5 auch hier durch mindestens zwei Verpackungseinheiten 5 gleichzeitig. Die Wärmebehandlung kann durch Anpassen der Fördergeschwindigkeit an eine vorgegebene Maschinenleistung angepasst werden.

Die Erfindung ist nicht auf bestimmte Verpackungseinheiten 5 beschränkt, solange an diesen wenigstens zwei Elektroden 15, 16 zum Durchleiten eines elektrischen Stroms durch das Produkt vorhanden sind.

Vorzugsweise sind die Verpackungselektroden 15, 16 jeweils an einer Stirnfläche der Verpackungseinheit 5 angeordnet. Ferner umfasst die Verpackungseinheit 5 zumindest eine elektrisch isolierende Mantelfläche 5a. Unter elektrisch leitend und isolierend ist hier eine funktionelle Definition bezogen auf einen für die Wärmebehandlung des Produkts 6 relevanten Stromfluss zu verstehen. Das heißt, der für die Wärmebehandlung eingesetzte Strom fließt im Wesentlichen durch die Elektroden 15, 16 und das Produkt 6 und nicht durch die isolierende Mantelfläche 5a. Entsprechend ist die elektrische Leitfähigkeit der elektrisch isolierenden Mantelfläche 5a vernachlässigbar klein gegenüber der elektrischen Leitfähigkeit des Produkts 6 und derjenigen der Elektroden 15, 16.

Die Verpackungselektroden 15, 16 können beispielsweise aus Edelstahl bestehen oder aus einem Verbundmaterial, bei dem zumindest die dem Produkt zugewandte Innenseite ganzflächig elektrisch leitend ist und eine elektrisch leitende Verbindung zur Außenseite der Elektrode 15, 16 besteht. Die Verpackungselektroden 15, 16 sind vorzugsweise parallel zueinander angeordnet, so dass sich in der Verpackungseinheit 5 eine räumlich möglichst homogene Verteilung des Stromflusses durch das Produkt 6 ergibt. Aus demselben Grund sind die Elektroden 15, 16 vorzugsweise plan und möglichst großflächig. Es ist daher besonders vorteilhaft, die Elektroden 15, 16 als metallische Stirnflächen einer ansonsten isolierenden Verpackungseinheit 5 mit ellipsoidem oder polygonalem Querschnitt auszubilden, insbesondere als Stirnflächen einer zylindrischen Verpackungseinheit 5 wie beispielsweise einer Dose. Dies begünstigt die Ausbildung eines homogenen elektrischen Felds, um das Produkt 6 möglichst gleichmäßig und schnell zu erwärmen, insbesondere auch in festen Produktbestandteilen, in denen eine herkömmliche Erwärmung durch Wärmeleitung oftmals eingeschränkt ist.

Die Elektroden 15, 16 sind integraler Bestandteil der Verpackungseinheit 5 und bestehen vorzugsweise aus Edelstahlblech oder anderen für Lebensmittel zugelassenen leitenden Materialien wie beispielsweise Metalllegierungen oder Verbundmaterialien. Denkbar sind z. B. bedampfte Platten und Folien.

Für eine Wärmebehandlung beruhend auf Joulescher Erwärmung eignen sich Produkte 6 mit einer elektrischen Leitfähigkeit von 1 mS/m bis 10⁴ mS/m, die einen permanenten Kontakt mit den Verpackungselektroden 15, 16 herstellen können. Die Produkte 6 können homogen oder inhomogen sein, insbesondere auch mit unterschiedlichen elektrischen Leitfähigkeiten. Vorzugsweise unterscheiden sich die elektrischen Leitfähigkeiten der Einzelkomponenten des Produkts 6 voneinander jedoch höchstens um das Dreifache.

Ein Gasraum 51 in der Verpackungseinheit 5, wie beispielsweise in Figur 5 angedeutet, ist für die Ausdehnung des Produkts 6 je nach Anwendung sinnvoll. Der Gasraum könnte beispielsweise bis zu 10 % des Volumens der Verpackungseinheit 5 einnehmen. Auch ist zum Verschließen der befüllten und aufrecht stehenden Verpackungseinheit 5 mit der Verpackungselektrode 15 oder 16 über dem Produkt 6 eine flüssigkeitsfreie Kontaktstelle vorteilhaft. In Figur 5 sind ferner die Anschlusselektroden 7, 9 angedeutet, um die vorzugsweise liegende Behandlungsposition der Verpackungseinheit 5 zu veranschaulichen, bei der gewährleistet ist, dass das Produkt 6 während der Energieaufnahme möglichst großflächig mit beiden Verpackungselektroden 15, 16 in Kontakt ist.

Das Material der Verpackungseinheit 5 ist vorzugsweise so gewählt, dass diese einem inneren Überdruck von 10⁶ Pascal, zumindest aber 3x10⁵ Pascal widerstehen kann. Bei Verwendung weniger widerstandsfähiger oder entsprechend dünner Materialien kann die Wärmebehandlung in einer Überdruckkammer stattfinden, um dem erwärmungsbedingten Druckanstieg in der Verpackung auch bei Temperaturen über 100°C einen geeigneten äußeren Überdruck entgegen zu setzen. Alternativ kann die Verpackung 5 durch die beschriebene Ummantelungseinrichtung 23 gegen ein übermäßiges Ausdehnen geschützt werden.

## Patentansprüche

1. Vorrichtung (1, 31) zur Wärmebehandlung eines Produkts (6), insbesondere eines Lebensmittels, durch Einbringen von Heizenergie in das Produkt mittels eines elektrischen Stroms, wobei die Vorrichtung umfasst:
- eine Aufnahmeeinrichtung (3) zum Aufnehmen mehrerer Verpackungseinheiten (5), die das Produkt beinhalten, und an denen jeweils erste und zweite Elektroden (15, 16) ausgebildet sind;
- eine erste Elektrodeneinheit (8), die mit den ersten Elektroden (15) in Kontakt gebracht werden kann, um ein Fließen des elektrischen Stroms zu ermöglichen; und
- eine zweite Elektrodeneinheit (10), die mit den zweiten Elektroden (16) in Kontakt gebracht werden kann, um das Fließen des elektrischen Stroms zu ermöglichen, wobei die ersten und zweiten Elektrodeneinheiten (8, 10) Anschlusselektroden (7, 9) umfassen, die derart angeordnet und verschaltet sind, dass der Strom durch wenigstens zwei Verpackungseinheiten (5) fließen kann.

2. Vorrichtung nach Anspruch 1, wobei zumindest jeweils zwei Anschlusselektroden (7, 9) der ersten und zweiten Elektrodeneinheit (8, 10) parallel geschaltet sind und/oder zumindest eine Anschlusselektrode (7) der ersten Elektrodeneinheit (8) in Reihe mit einer Anschlusselektrode (9) der zweiten Elektrodeneinheit (10) geschaltet ist.

3. Vorrichtung nach Anspruch 1 oder 2, bei der die Anschlusselektroden (7, 9) der ersten und zweiten Elektrodeneinheit (8, 10) in einer Behandlungsstellung (11) zum Einbringen von Heizenergie in das Produkt (6) einander gegenüberliegend angeordnet und insbesondere zueinander parallel ausgerichtet sind.

4. Vorrichtung nach Anspruch 3, bei der die Anschlusselektroden (7, 9) der ersten und zweiten Elektrodeneinheit (8, 10) in der Behandlungsstellung (11) unter Einhaltung eines maximalen Abstands (D1) zueinander angeordnet sind, so dass sich die Verpackungseinheiten (5) während der Wärmebehandlung nicht in Richtung der Anschlusselektroden (15, 16) ausdehnen können.

5. Vorrichtung nach wenigstens einem der vorigen Ansprüche, bei der die Aufnahmeeinrichtung (3) eine insbesondere poröse Ummantelungseinrichtung (23) umfasst, die die Verpackungseinheiten (5) während der Wärmebehandlung derart umschließt, dass sich die Verpackungseinheiten nicht über einen vorgegebenes Maß, insbesondere nicht über einen maximalen Durchmesser (D3) hinaus ausdehnen können.

6. Vorrichtung nach wenigstens einem der vorigen Ansprüche, bei der die Aufnahmeeinrichtung (3) wenigstens ein Transportmittel (33, 35) umfasst, um die Anschlusselektroden (7, 9) der ersten und zweiten Elektrodeneinheit (8, 10) und die Verpackungseinheiten (5) während der Wärmebehandlung entlang einer gemeinsamen Förderbahn (37) zu bewegen.

7. Vorrichtung nach wenigstens einem der vorigen Ansprüche, bei der die Aufnahmeeinrichtung (3) wenigstens ein Rotationsmittel umfasst, um die Verpackungseinheiten (5) während der Wärmebehandlung zu drehen.

8. Vorrichtung nach wenigstens einem der vorigen Ansprüche, die ferner eine Wechselstromquelle (21) zur Erzeugung von Wärme in dem Produkt (6) umfasst, insbesondere eine Wechselstromquelle, die einen Strom im Frequenzbereich von 10 kHz bis 10 MHz erzeugen kann.

9. Verfahren zur Wärmebehandlung eines Produkts (6), insbesondere eines Lebensmittels, durch Einbringen von Heizenergie in das Produkt in Form eines elektrischen Stroms, wobei das Verfahren die folgenden Schritte umfasst:
a) Aufnehmen mehrerer Verpackungseinheiten (5), die das Produkt (6) enthalten, und an denen jeweils erste und zweite Elektroden (15, 16) ausgebildet sind;
b) Herstellen eines Kontakts zwischen den ersten Elektroden (15) und einer ersten Elektrodeneinheit (8) sowie zwischen den zweiten Elektroden (16) und einer zweiten Elektrodeneinheit (10), um das Fließen des elektrischen Stroms zu ermöglichen; und
c) Verschalten von Anschlusselektroden (7, 9), die an der ersten und zweiten Elektrodeneinheit (8, 10) vorgesehenen sind, und Anlegen einer elektrischen Spannung derart, dass der elektrische Strom durch mindestens zwei Verpackungseinheiten (5) gleichzeitig fließt.

10. Verfahren nach Anspruch 9, wobei die Leitfähigkeit des Produkts (6) im Bereich von 10⁻³ S/m bis 10 S/m liegt.

11. Verfahren nach Anspruch 9 oder 10, wobei das Produkt (6) mittels der Wärmebehandlung pasteurisiert oder sterilisiert wird.

12. Verfahren nach wenigstens einem der Ansprüche 9 bis 11, wobei die Verpackungseinheiten (5) nach der Wärmebehandlung mit entsalztem Wasser gekühlt werden.

13. Verfahren nach wenigstens einem der Ansprüche 9 bis 12, wobei eine Zieltemperaturerhöhung des Produkts (6) durch Anpassen der mit Hilfe des elektrischen Stroms in das Produkt eingebrachten elektrischen Heizenergie an die Wärmekapazität des Produkts eingestellt wird.

14. Verfahren nach Anspruch 13, wobei eine Zieltemperaturerhöhung des Produkts (6) an der Verpackungseinheit (5) von außen mittels Infrarot-Thermometer oder Pyrometer überwacht und insbesondere mit der eingebrachten elektrischen Heizenergie verglichen wird.

15. Verfahren nach wenigstens einem der Ansprüche 9 bis 14, wobei die Verpackungseinheiten (5) im Schritt a) in einem luftdicht verschlossenen Zustand aufgenommen werden.

16. Verfahren nach wenigstens einem der Ansprüche 9 bis 15, wobei die Verpackungseinheiten (5) während der Wärmebehandlung kontinuierlich entlang einer Fördertrecke (37) bewegt werden.

## Claims

1. Device (1, 31) for the thermal treatment of a product (6), in particular a food item, by introducing heating energy into the product by means of electric current, wherein the device comprises:
- receiving means (3) for receiving several packing units (5) which contain the product and at which first and second electrodes (15, 16) each are formed;
- a first electrode unit (8) that can be contacted with the first electrodes (15) to permit the electric current to flow; and
- a second electrode unit (10) that can be contacted with the second electrodes (16) to permit the electric current to flow,
wherein the first and second electrode units (8, 10) comprise connector electrodes (7, 9) which are arranged and interconnected such that the current can flow through at least two packing units (5).

2. Device according to claim 1, wherein at least two connector electrodes (7, 9) of the first and the second electrode units (8, 10) each are connected in parallel, and/or at least one connector electrode (7) of the first electrode unit (8) is connected in series with a connector electrode (9) of the second electrode unit (10).

3. Device according to claim 1 or 2, wherein the connector electrodes (7, 9) of the first and the second electrode units (8, 10) are arranged to be opposite to each other in a treatment position (11) for introducing heating energy into the product (6), and are in particular oriented parallel to each other.

4. Device according to claim 3, wherein the connector electrodes (7, 9) of the first and second electrode units (8, 10) are arranged in the treatment position (11) while a maximum distance (D1) to each other is not maintained, such that the packing units (5) cannot expand towards the connector electrodes (15, 16) during thermal treatment.

5. Device according to at least one of the preceding claims, wherein the receiving means (3) comprises an in particular porous enveloping means (23) which encloses the packing units (5) during thermal treatment such that the packing units cannot expand beyond a given degree, in particular not beyond a maximum diameter (D3).

6. Device according to at least one of the preceding claims, wherein the receiving means (3) comprises at least one transport means (33, 35) to move the connector electrodes (7, 9) of the first and the second electrode units (8, 10) and the packing units (5) along a common conveyor line (37) during thermal treatment.

7. Device according to at least one of the preceding claims, wherein the receiving means (3) comprises at least one rotation means to rotate the packing units (5) during thermal treatment.

8. Device according to at least one of the preceding claims which furthermore comprises an AC power supply (21) for generating heat in the product (6), in particular an AC power supply that can generate current within a frequency range of 10 kHz to 10 MHz.

9. Method of thermally treating a product (6), in particular a food item, by introducing heating energy into the product in the form of electric current, the method comprising the following steps:
a) receiving several packing units (5) which contain the product (6) and at which first and second electrodes (15, 16) are formed each;
b) creating a contact between the first electrodes (15) and a first electrode unit (8) and between the second electrodes (16) and a second electrode unit (10) to permit electric current to flow; and
c) interconnecting connector electrodes (7, 9) provided at the first and the second electrode units (8, 10), and applying an electric voltage such that electric current simultaneously flows through at least two packing units (5).

10. Method according to claim 9, wherein the conductivity of the product (6) is within a range of 10⁻³ S/m to 10 S/m.

11. Method according to claim 9 or 10, wherein the product (6) is pasteurized or sterilized by means of thermal treatment.

12. Method according to at least one of claims 9 to 11, wherein the packing units (5) are cooled with desalted water after thermal treatment.

13. Method according to at least one of claims 9 to 12, wherein a target temperature increase of the product (6) is adjusted by adapting the electrical heating energy introduced into the product by means of the electric current to the thermal capacity of the product.

14. Method according to claim 13, wherein a target temperature increase of the product (6) at the packing unit (5) is monitored from outside by means of an infrared thermometer or pyrometer and in particular compared to the introduced electric heating energy.

15. Method according to at least one of claims 9 to 14, wherein the packing units (5) are received in step a) in a hermetically closed state.

16. Method according to at least one of claims 9 to 15, wherein the packing units (5) are continuously moved along a conveying line (37) during thermal treatment.

## Revendications

1. Dispositif (1, 31) pour le traitement à la chaleur d'un produit (6), notamment d'un produit alimentaire, par introduction d'énergie de chauffage dans le produit au moyen d'un courant électrique, le dispositif comprenant :
- un agencement d'accueil (3) pour accueillir plusieurs unités d'emballage (5), qui renferment le produit et sur chacune desquelles sont formées une première électrode et une deuxième électrode (15, 16) ;
- une première unité d'électrode (8), qui peut être amenée en contact avec les premières électrodes (15) pour permettre une circulation du courant électrique ; et
- une deuxième unité d'électrode (10), qui peut être amenée en contact avec les deuxièmes électrodes (16) pour permettre la circulation du courant électrique,
les première et deuxième unités d'électrode (8, 10) comportant des électrodes de raccordement (7, 9), qui sont agencées et mises en circuit de manière à ce que le courant puisse circuler à travers au moins deux unités d'emballage (5).

2. Dispositif selon la revendication 1, dans lequel au moins respectivement deux électrodes de raccordement (7, 9) de la première et de la deuxième unité d'électrode (8, 10) sont montées en parallèle, et/ou au moins une électrode de raccordement (7) de la première unité d'électrode (8) est montée en série avec une électrode de raccordement (9) de la deuxième unité d'électrode (10).

3. Dispositif selon la revendication 1 ou la revendication 2, dans lequel les électrodes de raccordement (7, 9) de la première et de la deuxième unité d'électrode (8, 10) sont, dans une position de traitement (11) pour l'introduction d'énergie de chauffage dans le produit (6), agencées de manière mutuellement opposée et sont notamment orientées parallèlement les unes aux autres.

4. Dispositif selon la revendication 3, dans lequel les électrodes de raccordement (7, 9) de la première et de la deuxième unité d'électrode (8, 10) sont, dans la position de traitement (11), agencées de manière à respecter une distance maximale (D1) d'espacement mutuel, de manière à ce que les unités d'emballage (5) ne puissent pas se dilater en direction des électrodes de raccordement (15, 16) pendant le traitement à la chaleur.

5. Dispositif selon l'une au moins des revendications précédentes, dans lequel l'agencement d'accueil (3) comporte un système d'enveloppe (23) notamment poreux, qui entoure les unités d'emballage (5) pendant le traitement à la chaleur de façon telle, que les unités d'emballage ne puissent pas se dilater au-delà d'une dimension prescrite, notamment pas au-delà d'un diamètre maximal (D3).

6. Dispositif selon l'une au moins des revendications précédentes, dans lequel l'agencement d'accueil (3) comprend au moins un moyen de transport (33, 35) pour déplacer les électrodes de raccordement (7, 9) de la première et de la deuxième unité d'électrode (8, 10) et les unités d'emballage (5), le long d'une voie de transport commune (37), pendant le traitement à la chaleur.

7. Dispositif selon l'une au moins des revendications précédentes, dans lequel l'agencement d'accueil (3) comprend au moins un moyen de rotation pour faire tourner les unités d'emballage (5) pendant le traitement à la chaleur.

8. Dispositif selon l'une au moins des revendications précédentes, qui comprend par ailleurs une source de courant alternatif (21) pour la production de chaleur dans le produit (6), notamment une source de courant alternatif, qui est en mesure de produire un courant se situant dans une plage de fréquences de 10 kHz à 10 MHz.

9. Procédé de traitement à la chaleur d'un produit (6), notamment d'un produit alimentaire, par introduction d'énergie de chauffage dans le produit, sous la forme d'un courant électrique, le procédé comprenant les étapes suivantes :
a) accueil de plusieurs unités d'emballage (5), qui renferment le produit (6) et sur chacune desquelles sont formées une première électrode et une deuxième électrode (15, 16) ;
b) établissement d'un contact entre les premières électrodes (15) et une première unité d'électrode (8), ainsi qu'entre les deuxièmes électrodes (16) et une deuxième unité d'électrode (10), pour permettre la circulation du courant électrique ; et
c) mise en circuit d'électrodes de raccordement (7, 9), qui sont prévues sur la première et la deuxième unité d'électrode (8, 10), et application d'une tension électrique de façon telle, que le courant électrique circule simultanément à travers au moins deux unités d'emballage (5).

10. Procédé selon la revendication 9, d'après lequel la conductibilité du produit (6) se situe dans une plage de 10⁻³ S/m à 10 S/m.

11. Procédé selon la revendication 9 ou la revendication 10, d'après lequel le produit (6) est pasteurisé ou stérilisé au moyen du traitement à la chaleur.

12. Procédé selon l'une au moins des revendications 9 à 11, d'après lequel les unités d'emballage (5) sont refroidies avec de l'eau déminéralisée, après le traitement à la chaleur.

13. Procédé selon l'une au moins des revendications 9 à 12, d'après lequel on règle une augmentation de température ciblée du produit (6), par adaptation de l'énergie de chauffage électrique introduite dans le produit à l'aide du courant électrique, à la capacité calorifique du produit.

14. Procédé selon la revendication 13, d'après lequel une augmentation de température ciblée du produit (6) au niveau de l'unité d'emballage (5) est surveillée de l'extérieur au moyen d'un thermomètre à infrarouge ou d'un pyromètre, et est notamment comparée à l'énergie de chauffage électrique introduite.

15. Procédé selon l'une au moins des revendications 9 à 14, d'après lequel l'accueil des unités d'emballage (5) dans l'étape a) s'effectue dans un état fermé de manière étanche à l'air.

16. Procédé selon l'une au moins des revendications 9 à 15, d'après lequel les unités d'emballage (5) sont déplacées de manière continuelle le long d'une voie de transport (37) pendant le traitement à la chaleur.
